# EUROPEAN PATENT APPLICATION

(11) **EP 4 102 672 A1**
(43) Date of publication of application: **14.12.2022**
(21) Application number: 21178186.9
(22) Date of filing: 08.06.2021
(51) Int. Cl.: H02J 3/38

(54) **MULTI-CHANNEL INVERTER FOR A PHOTOVOLTAIC PLANT**

(71) Applicant: FIMER S.p.A., 20144 Milano (IT)
(72) Inventor: Mirra, Mirco, 52027 San Giovanni Valdarno (AR) (IT); Borgogni, Marco, 52027 San Giovanni Valdarno (AR) (IT); Ferrini, Paolo, 50066 Reggello (FI) (IT); Fubelli, Andrea, 00012 Guidonia Montecelio (RM) (IT)
(74) Representative: De Bortoli, Eros

(57) **Abstract**

An inverter for a photovoltaic plant, which comprises a DC section adapted to be electrically connected to a plurality of photovoltaic strings and a DC/AC conversion section electrically connected to said DC section and adapted to be electrically connected to an electric grid.

The DC section includes a DC-link stage and a DC-bus stage including a plurality of DC channels. Each DC channel is adapted to be electrically connected between a corresponding photovoltaic string and the DC-link stage.

The inverter includes an AC/DC conversion stage that is adapted to be electrically connected to the electric grid 200 and to the DC-link stage in such a way to polarize all the photovoltaic strings 100 in parallel at a positive voltage potential with respect to ground, when said photovoltaic strigs do not operate.

## Description

The present invention relates to a multi-channel inverter for a photovoltaic plant.

In general, a photovoltaic plant includes one or more photovoltaic strings, each formed by an array of photovoltaic panels electrically connected (normally according to a series configuration) between a pair of terminals of the photovoltaic string.

In operation, a photovoltaic string has a string terminal (positive string terminal) normally operating at a positive voltage potential with respect to ground and a string terminal (negative string terminal) normally operating at a negative voltage potential with respect to ground.

As it is widely known, the polarization of the negative string terminals of the photovoltaic strings at a negative voltage potential may give rise to PID (Potential Induced Degradation) phenomena in the photovoltaic cells. These phenomena, which are basically due to the circulation of reverse currents through the photovoltaic cells, may lead to yield losses or aging of the photovoltaic strings.

In order to overcome this issue, according to some arrangements of the state of the art (e.g. described in DE202006008936U1), a voltage source is electrically connected between the negative string terminal of each photovoltaic string and the ground in order to polarize the negative string terminal at a positive voltage potential with respect to ground, when the photovoltaic string does not operate (e.g. at night). In this way, direct currents are forced to flow through the photovoltaic cells and degradation phenomena occurring during operation of the photovoltaic strings (e.g. during the day) can be recovered, at least partially.

Unfortunately, the experience has clearly shown that these solutions of the state of the art are quite difficult and expensive to implement in photovoltaic plants including multiple photovoltaic strings, since they require extensive cabling operations and the installation of a number of additional dedicated devices in the photovoltaic plant.

The main aim of the present invention is to provide a multi-channel inverter for a photovoltaic plant, which allows overcoming or mitigating the disadvantages described above.

Within this aim, another object of the present invention is to provide a multi-channel inverter, which is capable of providing recovery functionalities of damages deriving from PID phenomena in the photovoltaic strings electrically connected thereto.

Another object of the present invention is to provide a multi-channel inverter, which has a compact structure with a relatively small size.

Yet another object of the present invention is to provide a multi-channel inverter, which is easy and inexpensive to produce at industrial level.

This aim and these objects, together with other objects that will be more apparent from the subsequent description and from the accompanying drawings, are achieved, according to the invention, by an inverter, according to claim 1 and the related dependent claims.

In a general definition, the inverter, according to the invention, comprises a DC section adapted to be electrically connected to a plurality of photovoltaic strings and a DC/AC conversion section electrically connected to said DC section and adapted to be electrically connected to an electric grid.

The DC section includes a DC-link stage having a positive DC-link terminal and a negative DC-link terminal electrically connected to the DC/AC conversion section and a DC-bus stage including a plurality of DC channels.

Each DC channel is adapted to be electrically connected between a corresponding photovoltaic string and the DC-link stage.

The inverter, according to the invention, further comprises an AC/DC conversion stage having input terminals electrically connected to the electric grid and having a positive output terminal electrically connected to the negative DC-link terminal of said DC-link stage and a negative output adapted to be electrically connected to ground.

The AC/DC conversion stage is adapted to provide an output offset voltage to polarize the negative DC-link terminal of said DC-link stage (and, consequently, the negative string terminal of each photovoltaic string) at a positive voltage potential with respect to ground, when said photovoltaic strings do not operate.

According to an aspect of the invention, the AC/DC conversion stage comprises a rectifier circuit and a single DC/DC converter electrically connected in series between the input terminals and the output terminals of said AC/DC conversion stage.

According to an aspect of the invention, the AC/DC conversion stage comprises a switch circuit adapted to cause the electrical connection or disconnection of said DC/DC converter to or from said DC-link stage.

According to an aspect of the invention, the AC/DC conversion stage comprises a voltage regulation circuit operatively coupled to the DC/DC converter to control an output voltage provided by said DC/DC converter.

According to an aspect of the invention, the AC/DC conversion stage comprises a current regulation circuit operatively coupled to the DC/DC converter to control an output current provided by said DC/DC converter.

According to an aspect of the invention, the AC/DC conversion stage comprises a control unit operatively coupled to the DC/DC converter to control operation of said DC/DC converter.

Preferably, the control unit is operatively coupled to the above-mentioned switch circuit.

In operation, the control unit commands said switch circuit to cause the electrical connection of the DC/DC converter to the DC-link stage, when said photovoltaic strings do not operate, and it commands the switch circuit to cause the electrical disconnection of said DC/DC converter from the DC-link stage, when the photovoltaic strings operate.

Preferably, the control unit is operatively coupled to the voltage regulation circuit. In operation, the control unit controls the operation of the DC/DC converter in response to receiving voltage regulation signals from the voltage regulation circuit.

In operation, the control unit commands the switch circuit to disconnect electrically the DC/DC converter from the DC-link stage, when the voltage regulation circuit detects an output voltage provided in output by the DC/DC converter, which exceeds a predefined voltage threshold value.

Preferably, the control unit is operatively coupled to the current regulation circuit. In operation, the control unit commands the switch circuit to disconnect electrically the DC/DC converter from the DC-link stage, when the current regulation circuit detects an output current provided in output by the DC/DC converter, which exceeds a predefined current threshold value.

According to an aspect of the invention, each DC channel of the DC bus stage comprises a DC/DC conversion module including one or more DC/DC converters.

Preferably, each DC/DC conversion module includes a pair of DC/DC converters of the boost type arranged according to a series configuration.

According to an aspect of the invention, said one or more DC/DC converters are adapted to carry out MPPT functionalities.

According to an aspect of the invention, each DC/DC conversion module comprises one or more bypass diodes. Each bypass diode is electrically connected in parallel to a corresponding DC/DC converter of said DC/DC conversion module.

Further characteristics and advantages of the present invention will be more apparent with reference to the description given below and to the accompanying figures, provided purely for explanatory and non-limiting purposes, wherein:
- Fig. 1 schematically illustrates a multi-channel inverter, according to the present invention;
- Figs. 2-3 schematically illustrate an embodiment of the multi-channel inverter, according to the present invention;
- Fig. 4 schematically illustrates a further embodiment of the multi-channel inverter, according to the present invention.

With reference to the aforesaid figures, the present invention relates to a multi-channel inverter 1 for a low voltage photovoltaic plant.

For the sake of clarity, it is specified that the term "low voltage" refers to operating voltages lower than 1 kV AC and 2 kV DC.

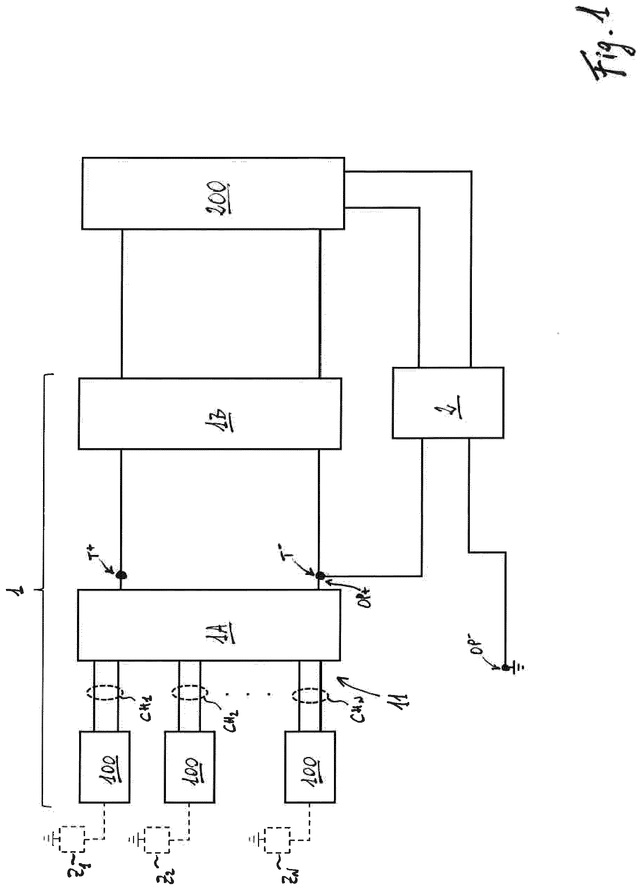

Referring to figure 1, it is shown the multi-channel inverter 1 of the invention.

The inverter 1 is intended to be installed in a photovoltaic plant including multiple photovoltaic strings 100.

In general, each photovoltaic string 100 comprises one or more photovoltaic panels electrically connected (preferably in series) between a positive string terminal S⁺, which normally has a positive voltage polarity, and a negative string terminal S⁻, which normally has a negative voltage polarity.

For the sake of clarity, it is specified that, according to the present invention, an electric terminal or electric line is "positive", when it operates at a relatively higher voltage potential (normally at a positive voltage potential with respect to ground), and it is "negative", when it operates at a relatively lower voltage potential (normally at a negative voltage potential with respect to ground or at a ground potential).

Additionally, it is specified that, according to the present invention, an electric terminal or electric line has a "positive voltage polarity", when it normally operates at a positive voltage potential with respect to ground, and it has a "negative voltage polarity", when it normally operates at a negative voltage potential with respect to ground or at a ground potential.

In general, each photovoltaic string 100 is electrically isolated with respect to ground and it has string terminals S⁺, S⁻ operating at floating voltages. However, normally, each string terminal is coupled to ground by parasitic impedances Z₁, Z₂, Z_{N}, which typically include capacitive and resistive components electrically connected in parallel.

In operation, the multi-channel inverter 1 is electrically connected to the photovoltaic strings 100 and to an electric grid 200 (e.g. the mains). In general, the inverter 1 is adapted to receive DC electric power from the photovoltaic strings 100, convert said DC electric power into AC electric power and provide said AC electric power to the electric grid 200.

The inverter 1 comprises a DC section 1A and an DC/AC conversion section 1B that are electrically connected in cascade.

The DC section 1A includes a DC-link stage 12 having a positive DC-link terminal T⁺ and a negative DC-link terminal T⁻ (having a negative voltage polarity) electrically connected to the DC/AC conversion section 1B. The DC-link terminals T⁺, T⁻ thus form an output port for the DC section 1A and an input port for the DC/AC conversion section 1B.

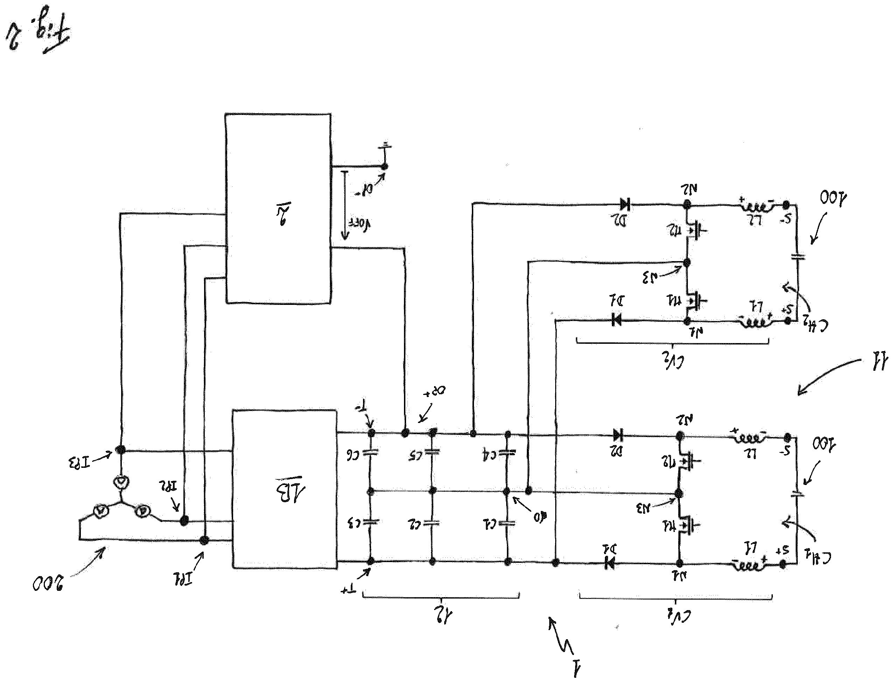

As shown in figures 2-3, the DC-link stage 12 comprises a network of capacitors, which may be conveniently arranged according to the configuration shown in figures 2-4 to provide a DC voltage in input to the DC/AC conversion stage 1B.

Referring to figure 2, the DC-link stage 12 preferably comprises multiple pairs of capacitors C1, C2, C3, C4, C5, C6 electrically connected in parallel between the positive and negative DC-link terminals T⁺, T⁻. Each pair of capacitors includes a capacitor C1, C2, C3 electrically connected between the positive DC-link terminal T⁺ and a common node N0 and a capacitor C4, C5, C6 electrically connected between the negative DC-link terminal T⁻ and the common node N0.

The DC section 1A includes a DC-bus stage 11 electrically connected with the photovoltaic strings 100 to receive DC electric power from these latter.

Since the inverter 1 is of the multi-channel type, the DC-bus stage 11 comprises a plurality of DC channels CH₁, CH₂, CH_{N}, each of which is, in operation, electrically connected with the string terminals S⁺, S⁻ of a corresponding photovoltaic string 100.

In general, the inverter 1 may include any number of DC channels depending on the number of photovoltaic strings 100 of the photovoltaic plant.

In figures 2-4, embodiments of the inverter 1 including two DC channels CH₁, CH₂ are shown.

In the following, the multi-channel inverter 1 will be described with particular reference to these embodiments of the invention for the sake of simplicity, without intending to limit the scope of the invention in any way.

The DC-channels CH₁, CH₂ of the DC-bus stage 11 are electrically connected in parallel to the DC-link stage 12, namely to the DC-link terminals T⁺, T⁻ of the DC-link stage 12.

Each DC channel CH₁, CH₂ includes a positive electric line electrically connecting the positive string terminal S⁺ of the corresponding photovoltaic string and the positive DC-link terminal T⁺ of the DC-link stage 12, and a negative electric line (having a negative voltage polarity) electrically connecting the negative string terminal S⁻ of the corresponding photovoltaic string and the negative DC-link terminal T⁻ of the DC-link stage 12.

According to some embodiments of the invention, each DC channel CH₁, CH₂ conveniently comprises a corresponding DC/DC conversion module CV₁, CV₂ comprising one or more DC/DC converters

Preferably, each conversion module CV₁, CV₂ includes a pair of DC/DC converters arranged according to a series configuration.

Preferably, these DC/DC converters are of the boost type and they may be conveniently arranged according to the series configuration shown in figures 2-4 to provide DC/DC conversion functionalities.

Referring to figures 2-4, each conversion module CV₁, CV₂ includes a first DC/DC converter, which comprises a first inductance L1 and a first diode D1 arranged along the positive electric line of the DC channel. The inductance L1 is electrically connected between the positive string terminal S⁺ and a first intermediate node N1 of the positive electric line whereas the diode D1 has its anode electrically connected with the intermediate node N1 and its cathode electrically connected with the positive DC-link terminal T⁺ of the DC-link stage 12. The first DC/DC converter further comprises a first switch M1 (e.g. a MOSFET) electrically connected between the intermediate node N1 and a common node N3.

Similarly, each conversion module CV₁, CV₂ includes a second DC/DC converter, which comprises a second inductance L2 and a second diode D2 arranged along the negative electric line of said DC channel. The inductance L2 is electrically connected between the negative string terminal S⁻ and a second intermediate node N2 of the negative electric line of the DC-channel whereas the diode D2 has its cathode electrically connected with the intermediate node N2 and its anode electrically connected with the negative DC-link terminal T⁻ of the DC-link stage 12.

The second DC/DC converter further comprises a second switch M2 electrically connected between the intermediate node N2 and the common node N3.

Preferably, the common nodes N3 of the DC/DC converters at the DC channels are electrically connected one to another and to the common node N0 of the DC-link stage 12 in such a way to be equipotential.

Preferably, the DC/DC conversion section 1A is adapted to carry out MPPT (Maximum Power Point Tracking) functionalities. In this case, the (one or more) DC/DC converters of each conversion module CV₁, CV₂ are configured to carry out said MPPT functionalities by implementing suitable algorithms or procedures of known type.

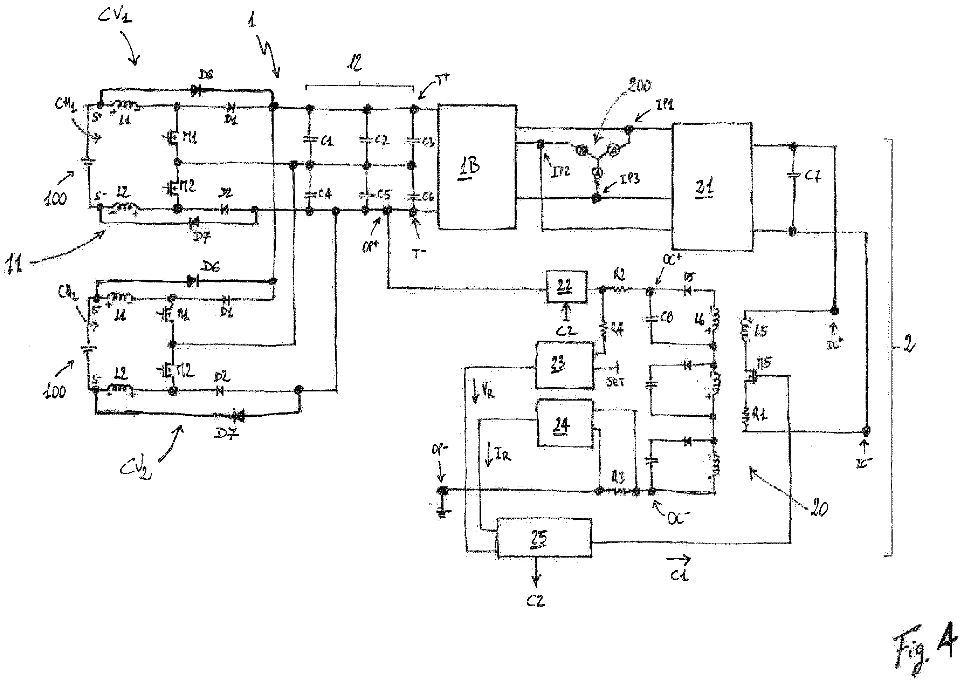

According to some embodiments of the invention (figure 4), each DC/DC conversion module CV₁, CV₂ comprises one or more bypass diodes D6, D7. Each bypass diode is electrically connected in parallel to a DC/DC converter of the corresponding conversion module.

In the embodiment shown in figure 4, each conversion module CV₁, CV₂ includes a first bypass diode D6 electrically connected between the positive string terminal S⁺ and the positive DC-link terminal T⁺ of the DC-link stage 12, in parallel to the first DC/DC converter L1, D1, M1, and a second bypass diode D7 electrically connected between the negative string terminal S⁻ and the negative DC-link terminal T⁻ of the DC-link stage 12, in parallel to the second DC/DC converter L2, D2, M2.

Conveniently, the first bypass diode D6 has its anode electrically connected to the positive string terminal S⁺ and its cathode electrically connected to the positive DC-link terminal T⁺ while the second bypass diode D7 has its cathode electrically connected to the negative string terminal S⁻ and its anode electrically connected with the negative DC-link terminal T⁻.

In normal operation, the first and second bypass diodes D6, D7 of each conversion module CV₁, CV₂ are brought in a conduction state when the corresponding DC/DC converters (electrically connected in parallel) are switched off, for example due to the fact that the corresponding string 100 already provides a relatively high output voltage at the string terminals S⁺, S⁻.

In practice, the first and second bypass diodes D6, D7 are adapted to short-circuit the corresponding DC/DC converters (electrically connected in parallel) of the corresponding DC-channel, when such converters are switched off.

On the other hand, when the DC/DC converters of each DC channel are switched on, the first and second bypass diodes D6, D7 are naturally brought in an interdiction state thereby interrupting any bypass path between the string terminals S⁺, S⁻ and the DC-link terminals T⁺, T⁻.

As mentioned above, the DC/AC conversion section 1B is electrically connected between the DC section 1A and the electric grid 200.

Preferably, the DC/AC conversion section 1B comprises one or more DC/AC converters (not shown) adapted to provide a DC/AC conversion of the DC electric power provided by the photovoltaic strings 100 into AC electric power to be delivered to the electric grid 200.

The DC/AC conversion section 1B further comprises a suitable AC bus (not shown) to connect electrically the above-mentioned DC/AC converters to the electric grid 200.

In general, both the DC section 1A and the DC/AC conversion section 1B of the multi-channel inverter 1 may be arranged according to solutions of known type and they will not be further described in further details for the sake of brevity.

A particular aspect of the invention consists in that the multi-channel inverter 1 comprises a novel arrangement capable of providing, in parallel, anti-PID recovery functionalities for all the photovoltaic strings electrically connected to the inverter, when said photovoltaic strings do not operate (e.g. at night).

In particular, according to the invention, the inverter 1 comprises an AC/DC conversion stage 2 having input terminals IP1, IP2, IP3 electrically connected to the electric grid 200, a positive output terminal OP⁺ electrically connected to the negative DC-link terminal T⁻ of the DC-link stage 12 and a negative output terminal OP⁻ electrically connected to ground.

Thanks to this particular connection arrangement of the output terminals OP⁺, OP⁻, the AC/DC conversion stage 2 can provide in output a positive DC-offset voltage V_{OFF} to polarize the negative DC-link terminal T⁻ of the DC-link stage 12 at a positive voltage potential with respect to ground, when said photovoltaic strings do not operate. In this way, all the negative string terminals S⁻ of the photovoltaic strings 100 can be polarized in parallel at a positive voltage potential with respect to ground, when said photovoltaic strings do not operate.

In this way, direct polarization currents can circulate along the photovoltaic cells of each photovoltaic string 100 passing through the negative electric line of the corresponding DC channel, the parasitic impedances coupling the negative string terminal S⁻ to ground and the ground itself. Degradation phenomena occurring during operation of the photovoltaic string (e.g. during the day) can therefore be recovered, at least partially.

For the sake of clarity, it is specified that the photovoltaic strings "do not operate" when they do not provide electric energy to the electric grid 200 for any other reason, e.g. at night or because the DC/AC conversion stage 1B is switched or electrically disconnected from the DC-link stage 12 and/or the electric grid 200.

The solution provided by the present invention allows providing recovery functionalities of damages deriving by PID phenomena in all the photovoltaic strings in parallel, without installing a dedicated device at each photovoltaic string 100. This allows remarkably reducing the overall industrial costs of the photovoltaic plant with respect to the employment of traditional solutions of the state of the art.

In the embodiments of the invention in which each conversion module CV₁, CV₂ includes suitable bypass circuits (figure 4), direct polarization currents can circulate along the bypass diodes D6, D7 of each DC channel, which are naturally brought in a conduction state thanks to the positive DC-offset voltage V_{OFF} provided by the AC/DC conversion stage 2.

Advantageously, this solution allows reducing circuit losses, since direct polarization currents do not circulate along the inductances L1, L2 of the DC/DC converters of each DC channel.

Preferably, the AC/DC conversion stage 2 comprises a rectifier circuit 21 and a DC/DC converter 20 (more preferably a single converter) electrically connected in series between the input terminals IP1, IP2, IP3 and the output terminals OP⁺, OP⁻ of the AC/DC conversion stage.

The rectifier circuit 21 is adapted to rectify the AC voltage provided by the electric grid 200.

The rectifier circuit 21 may be conveniently arranged according to solutions of known type, for example according to a diode bridge configuration, which may be suitably designed according to the number of electric phases of the electric grid 200.

Conveniently, a filtering capacitor C7 may be electrically connected at the output terminals of the rectifier circuit 21 to filter the DC voltage provided in output by this latter.

The DC/DC converter 20 is adapted to receive the rectified DC voltage provided in output by the rectifier circuit 21 and provide an adjustable output voltage V_{OFF} to be applied to the negative string terminals S⁻ of the photovoltaic strings 100.

Preferably, the DC/DC converter 20 is of the flyback type and it may be conveniently arranged according to the configuration shown in figures 2-3 to provide DC/DC conversion functionalities.

The DC/DC converter 20 comprises input converter terminals IC⁺, IC⁻, output converter terminals OC⁺, OC⁻ and a voltage transformer L5, L6 coupling said input and output converter terminals.

The DC/DC converter 20 comprises an input section including an input circuit and a switch M5 (e.g. a MOSFET) electrically connected in series between the input terminals IC⁺, IC⁻. The input circuit comprises an input inductance L5 (the primary winding of the above-mentioned voltage transformer) and a resistance R1 electrically connected in series.

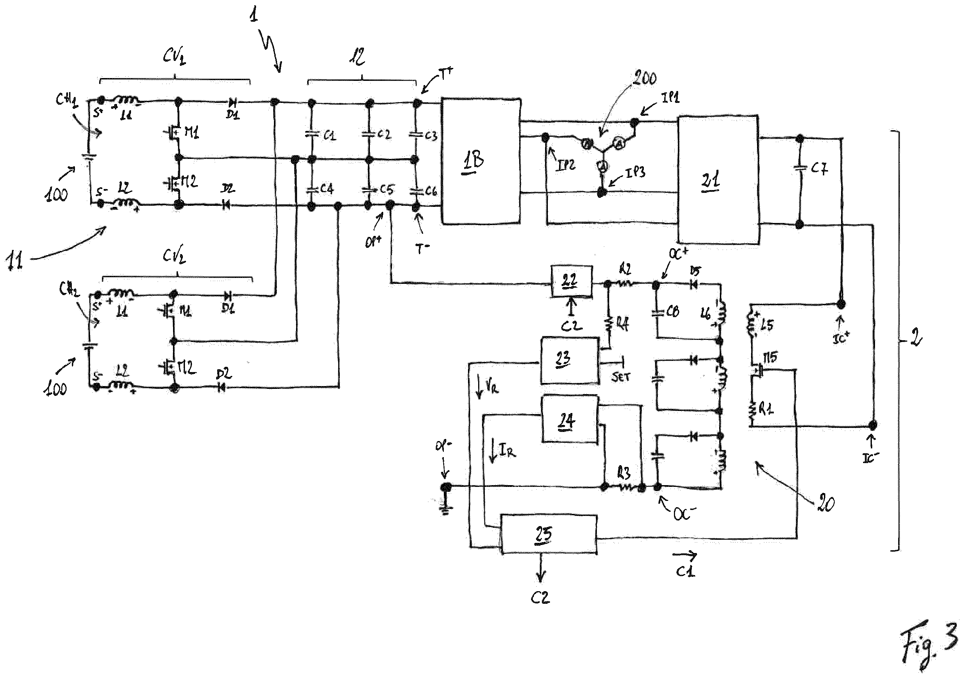

The DC/DC converter 20 comprises an output section including a plurality (for example three as shown in figure 3) output circuits electrically connected in series between the output converter terminals OC⁺, OC⁻. Each output circuit has an inductance L6 (a secondary winding of the above-mentioned voltage transformer) coupled to the input inductance L5 of the input section of the DC/DC converter and a diode D5 electrically connected in series. Each output circuit further includes a capacitor C8 electrically connected in parallel to the series formed by the inductance L6 and the diode D5.

Preferably, the output section of the DC/DC converter 20 comprises one or more current limiters R2 electrically connected in series with the above-mentioned output circuits.

The circuit solution shown in figure 3 allows reducing the size of the input and output inductances L5, L6 of the DC/DC converter. However, as the skilled artisan may certainly understand, an output section including a single LC circuit may be suitably arranged.

Preferably, the AC/DC conversion stage 2 comprises a control unit 25 operatively coupled to the DC/DC converter 20 to control the operation of this latter. In particular, the control unit 25 is operatively coupled to the switch M5 to control said through suitable control signals C1 in such a way to drive it in an interdiction state or a conduction state, according to the voltage level V_{OFF} to be provided in output.

In order to control the operation of the switch M5, the control unit 25 may adopt well-known control strategies, such as PWM modulation or the like.

The control unit 25 comprises suitable data processing means to carry out its functionalities.

Said data processing means may be digitally implemented. In this case, the control unit 25 may include one or more digital processing devices (e.g. one or more microprocessors) configured to execute suitable software instructions stored in a medium to perform the desired functionalities. However, other alternative solutions to implement said data processing means are available to the skilled person.

As mentioned above, the AC/DC conversion stage 2 is adapted to provide in output a positive DC-offset voltage V_{OFF} to bias the negative DC-link terminal T⁻ of the DC-link stage 12, when the photovoltaic strings 100 do not operate.

On the other hand, the AC/DC conversion stage 2 is adapted to not operate (i.e. to provide no output offset voltage), when the when the photovoltaic strings 100 operate.

To this aim, the AC/DC conversion stage 2 preferably comprises a switch circuit 22 adapted to cause the electrical connection or disconnection of the DC/DC converter 20 to or from the DC-link stage 12.

Preferably, the switch circuit 22 comprises one or more switches (e.g. electromechanical relays) controllable by the control unit 25 through suitable control signals C2 in such a way to drive said switches in an interdiction state or a conduction state, depending on whether the DC/DC converter 20 has to be electrically connected or disconnected to the DC-link stage 12.

The control unit 25 is adapted to command the switch circuit 22 to cause the electrical connection of the DC/DC converter 20 to the DC-link stage 12, when the photovoltaic strings 100 do not operate, and command the switch circuit 22 to cause the electrical disconnection of the DC/DC converter 20 from the DC-link stage 12, when the photovoltaic strings 100 operate.

Preferably, the switch circuit 22 is electrically connected in series to the positive output terminal OP⁺ of the AC/DC conversion stage 2, as shown in figure 3. However, in principle, the switch circuit 22 may also be electrically connected in series to the negative output terminal OP⁻ of the AC/DC conversion stage 2.

Preferably, the AC/DC conversion stage 2 comprises a voltage regulation circuit 23 operatively coupled to the DC/DC converter 20 to control the output voltage V_{OFF} provided by the DC/DC converter 20.

Conveniently, the control unit 25 is adapted to control the operation of the DC/DC converter 21 in response to receiving voltage regulation signals VR from the voltage regulation circuit in such a way to adjust the output voltage V_{OFF} provided by the DC/DC converter depending on these regulation signals.

The regulation signals VR may be indicative of the output voltage V_{OFF} provided by the DC/DC converter 20. The detection of the output voltage V_{OFF} may be obtained through a suitable resistive divider (for example including the resistor R4 as shown in figure 3) electrically connected between the positive output converter OC⁺ of the DC/DC converter 20 and the voltage regulation circuit 23.

The regulation signals VR may also be indicative of predefined voltage values desired for the output voltage V_{OFF} provided by the DC/DC converter 20. Such predefined voltage values which may be set by the user through a suitable setting terminal SET of the voltage regulation circuit 23.

The regulation signals VR may include also alarm signals generated by the voltage regulation circuit 23 when the output voltage V_{OFF} provided by the DC/DC converter 20 exceeds a predefined voltage threshold value. In this case, the control unit 25 is conveniently adapted to command the switch circuit 25 to cause the electrical disconnection of the DC/DC converter 20 from the DC-link stage 12.

Preferably, the voltage regulation circuit 23 comprises a network of operational amplifiers that may be suitably arranged to carry out the functionalities illustrated above.

Preferably, the AC/DC conversion stage 2 comprises a current regulation circuit 24 operatively coupled to the DC/DC converter 20 to control an output voltage V_{OFF} provided by the DC/DC converter 20.

Conveniently, the control unit 25 is adapted to control the operation of the DC/DC converter 20 in response to receiving current regulation signals IR from the current regulation circuit 23.

The regulation signals IR may be indicative of the output current I_{OFF} provided by the DC/DC converter 20. The detection of the output current I_{OFF} may be obtained through a suitable resistive shunt (for example including the resistor R3 as shown in figure 3) electrically connected series to the negative output converter OC⁻ of the DC/DC converter 20 and electrically connected in parallel to the current regulation circuit 24.

The regulation signals IR may include alarm signals generated by the current regulation circuit 24 when the output current I_{OFF} provided by the DC/DC converter 20 exceeds a predefined current threshold value. In this case, the control unit 25 is conveniently adapted to command the switch circuit 25 to cause the electrical disconnection of the DC/DC converter 20 from the DC-link stage 12.

Preferably, the current regulation circuit 24 comprises a network of operational amplifiers that may be suitably arranged to carry out the functionalities illustrated above.

The inverter 1 may be subject to implementation variants and modifications still falling within the scope of the invention.

As an example, the inverter 1 may include a further switch circuit (not shown) adapted to cause the electrical connection or disconnection of the DC/DC converter 20 to or from the electric grid 200. Such a switch circuit may be operated in coordination with the switch circuit 22 described above.

As an example, the inverter 1 may include a DC/DC converter 20 having a different configuration, for example of the boost type.

The present invention allows achieving the intended aims and objects.

The inverter 1 is provided with an AC/DC conversion stage 2 that is electrically connected to the electric grid 200 and to the DC-link stage 12 in such a way to polarize all the negative string terminals S⁻ of the photovoltaic strings 100 in parallel at a positive voltage potential with respect to ground, when the photovoltaic strigs do not operate.

The inverter 1 can thus providing, in parallel, anti-PID recovery functionalities for all the photovoltaic strings electrically connected to the inverter 1, without the need of additional dedicated devices electrically connected to each photovoltaic string.

The inverter 1 is conveniently capable of providing MPPT functionalities and having the DC channels CH₁, CH₂, CH_{N} substantially independent one from another.

The inverter 1 has a compact structure with a relatively small size. The above-mentioned AC/DC conversion stage 2 may in fact be easily integrated and it may employ MOSFETs or equivalent switching devices for its practical implementation.

The inverter 1 can be easily manufactured at industrial level with highly automated operations at competitive costs with respect to known solutions of the state of the art.

## Claims

1. An inverter (1) for a photovoltaic plant, said inverter comprising a DC section (1A) adapted to be electrically connected to a plurality of photovoltaic strings (100) and a DC/AC conversion section (1B) electrically connected to said DC section and adapted to be electrically connected to an electric grid (200), said DC section including a DC-link stage (12) having a positive DC-link terminal (T⁺) and a negative DC-link terminal (T⁻) electrically connected to said DC/AC conversion section (1B) and a DC-bus stage (11) including a plurality of DC channels (CHI, CH₂, CH_{N}), each DC channel being adapted to be electrically connected between a corresponding photovoltaic string (100) and said DC-link stage (12), **characterised in that** said inverter (1) comprises an AC/DC conversion stage (2) having input terminals (IP1, IP2, IP3) electrically connected to said electric grid (200), a positive output terminal (OP⁺) electrically connected to the negative DC-link terminal (T⁻ ) of said DC-link stage (12) and a negative output (OP⁻) electrically connected to ground, said AC/DC conversion stage being adapted to provide a positive output offset voltage (V_{OFF}) to polarize the negative DC-link terminal (T⁻) of said DC-link stage (12) at a positive voltage potential with respect to ground, when said photovoltaic strings (100) do not operate.

2. Inverter, according to claim 1, **characterised in that** said AC/DC conversion stage (2) comprises a rectifier circuit (21) and a DC/DC converter (20) electrically connected in series between the input terminals (IP1, IP2, IP3) and the output terminals (OP⁺, OP⁻) of said AC/DC conversion stage.

3. Inverter, according to claim 2, **characterised in that** said AC/DC conversion stage (2) comprises a switch circuit (22) adapted to cause the electrical connection or disconnection of said DC/DC converter (20) to or from said DC-link stage (12).

4. Inverter, according to one of the claims from 2 to 3, **characterised in that** said AC/DC conversion stage (2) comprises a voltage regulation circuit (23) operatively coupled to said DC/DC converter (20) to control an output voltage (V_{OFF}) provided by said DC/DC converter.

5. Inverter, according to one of the claims from 2 to 4, **characterised in that** said AC/DC conversion stage (2) comprises a current regulation circuit (24) operatively coupled to said DC/DC converter (20) to control an output current (I_{OFF}) provided by said DC/DC converter.

6. Inverter, according to one of the claims from 2 to 5, **characterised in that** said AC/DC conversion stage (2) comprises a control unit (25) operatively coupled to said DC/DC converter (20).

7. Inverter, according to claims 3 and 6, **characterised in that** said control unit (25) is operatively coupled to said switch circuit (22), said control unit being adapted to command said switch circuit to cause the electrical connection of said DC/DC converter (20) to said DC-link stage (12), when said photovoltaic strings (100) do not operate, and being adapted to command said switch circuit to cause the electrical disconnection of said DC/DC converter (20) from said DC-link stage (12), when said photovoltaic strings (100) operate.

8. Inverter, according to claims 4 and 6, **characterised in that** said control unit (25) is operatively coupled to said voltage regulation circuit (23), said control unit being adapted to control the operation of said DC/DC converter (21) in response to receiving voltage regulation signals (VR) from said voltage regulation circuit.

9. Inverter, according to claim 3 and 8, **characterised in that** said control unit (25) is adapted to command said switch circuit (25) to disconnect electrically said DC/DC converter (20) from said DC-link stage (12), when said voltage regulation circuit (23) detects an output voltage (V_{OFF}), provided in output by said DC/DC converter, exceeding a predefined voltage threshold value.

10. Inverter, according to claims 3, 5 and 6, **characterised in that** said control unit (25) is operatively coupled to said current regulation circuit (23), said control unit being adapted to command said switch circuit (25) to disconnect electrically said DC/DC converter (20) from said DC-link stage (12), when said current regulation circuit (24) detects an output current (I_{OFF}), provided in output by said DC/DC converter, exceeding a predefined current threshold value.

11. Inverter, according to one or more of the previous claims, **characterised in that** each DC channel (CH₁, CH₂) comprises a DC/DC conversion module (CV₁, CV₂) including one or more DC/DC converters.

12. Inverter, according to claim 11, **characterised in that** each DC/DC conversion module (CV₁, CV2) includes a pair of DC/DC converters (M1, D1, L1, M2, D2, L2) of the boost type arranged according to a series configuration.

13. Inverter, according to one of the claims from 11 to 12, **characterised in that** said one or more DC/DC converters are adapted to carry out MPPT functionalities.

14. Inverter, according to one of the claims from 11 to 13, **characterised in that** each DC/DC conversion module (CV₁, CV₂) comprises one or more bypass diodes (D6, D7), each bypass diode being electrically connected in parallel to a corresponding DC/DC converter.

15. A photovoltaic plant (100) **characterised in that** it comprises an inverter (1), according to one or more of the previous claims.
